Europäisches Patentamt

European Patent Office

Office européen des brevets

(19)

(11) **EP 0 780 965 B1**

(12) **FASCICULE DE BREVET EUROPEEN**

(45) Date de publication et mention
de la délivrance du brevet:
**03.03.1999 Bulletin 1999/09**

(51) Int Cl.⁶: **H02P 6/22**

(21) Numéro de dépôt: **96120339.5**

(22) Date de dépôt: **18.12.1996**

(54) **Procédé et dispositif de démarrage d'un moteur électrique synchrone sans balai**

Anlaufverfahren und Vorrichtung für bürstenlose Synchronmotoren

Starting method and device for brushless synchronous motors

(84) Etats contractants désignés:
**DE ES FR GB IT**

(30) Priorité: **22.12.1995 FR 9515374**

(43) Date de publication de la demande:
**25.06.1997 Bulletin 1997/26**

(73) Titulaire: **VALEO ELECTRONIQUE**
**94042 Creteil Cédex (FR)**

(72) Inventeur: **Permuy, Alfred**
**92500 Rueil-Malmaison (FR)**

(74) Mandataire: **Gamonal, Didier et al**
**Valeo Management Services**
**Propriété Industrielle**
**2, rue André Boulle,**
**B.P. 150**
**94004 Créteil (FR)**

(56) Documents cités:
EP-A- 0 481 933          WO-A-90/10973
DE-A- 2 428 718          US-A- 4 992 710
US-A- 5 225 759          US-A- 5 298 838

## Description

La présente invention se rapporte à la commande des moteurs électriques à courant continu synchrones sans balai, et plus particulièrement à un procédé et un dispositif de démarrage d'un tel moteur.

Elle trouve application dans le domaine des véhicules automobiles, le moteur électrique étant avantageusement utilisé pour entraîner un accessoire automobile, notamment une hélice pour le refroidissement du moteur à combustion interne ou pour la fonction chauffage/ventilation ou climatisation de l'habitacle du véhicule.

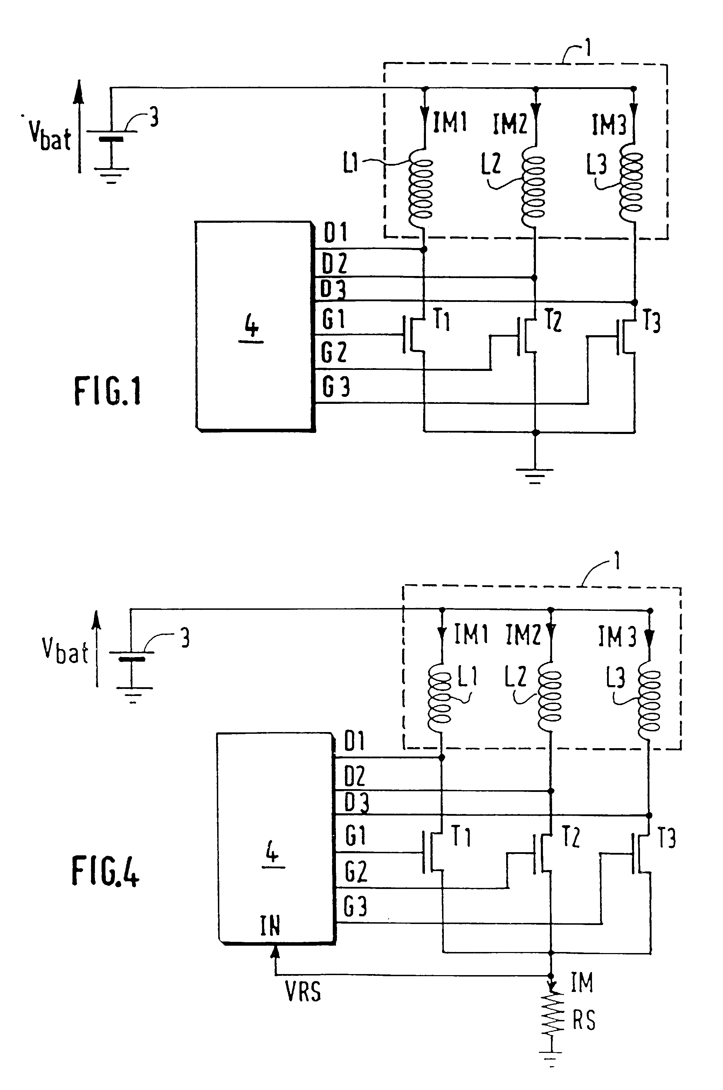

Un dispositif de commande d'un moteur à commutation électronique sans balai est représenté schématiquement à la figure 1. Le stator 1 comporte trois enroulements L1, L2, L3 dont une première extrémité commune est reliée à la borne positive d'une source d'alimentation telle que la batterie 3 du véhicule délivrant une tension Vbat, et dont la seconde extrémité est reliée à la masse à travers un transistor respectivement T1, T2, T3 tels que des transistors de commutation de type MOS.

La commande de l'état passant ou bloqué des transistors T1, T2, T3 selon une séquence déterminée (commutation de phases) permet de générer un champ tournant dans le stator 1 qui entraîne en rotation un rotor à aimants permanents non représenté (commande synchrone).

L'état des transistors T1, T2, T3 est commandé par une unité de contrôle 4 qui génère des tensions respectivement G1, G2, G3 appliquées sur les grilles des transistors.

D'une manière générale on se référera à la valeur de la tension Gn appliquée sur la grille d'un transistor Tn pour commuter un enroulement Ln quelconque du stator. Lorsque le transistor Tn est passant, un courant IMn circule dans l'enroulement Ln correspondant.

L'unité de contrôle 4, qui comporte un calculateur piloté par un programme déterminé, génère les tensions Gn de manière à faire fonctionner les transistors Tn en résistance variable. De la sorte, le niveau VG des tensions Gn détermine l'amplitude du courant IMn circulant dans les enroulements Ln du moteur.

Un tel moteur à courant continu est commandé de façon synchrone, c'est-à-dire de manière à ce que le mouvement du rotor suive la rotation du champ tournant. Il est donc nécessaire de connaître à chaque instant la position effective du rotor de manière à commuter les transistors Tn en conséquence, c'est-à-dire pour maintenir le synchronisme entre le champ tournant généré et le mouvement effectif du rotor.

A cet égard, la présente invention s'applique à un dispositif de commande n'utilisant pas de capteurs de position du rotor tels que des capteurs à effet Hall communément employés dans l'état de la technique.

En l'absence de tels capteurs, il est connu de surveiller la tension présente aux bornes des enroulements Ln du stator et de détecter le passage à zéro de la tension induite par la force contre électromotrice (f.c.e.m.) dans un enroulement non alimenté pour en déduire l'instant de commutation du transistor Tn correspondant.

Cette technique consiste à faire fonctionner le dispositif de commande en boucle fermée, l'unité de contrôle 4 générant les signaux G1, G2, G3 lors du passage à zéro des tensions de drain D1, D2, D3 des transistors T1, T2, T3 qui, lorsque la phase correspondante n'est pas alimentée, sont une image de la tension induite par la f.c.e.m. dans ladite phase non alimentée par la rotation du moteur.

Cependant, la f.c.e.m. n'agissant que lorsque le rotor tourne, cette technique n'est applicable que lorsque le moteur a atteint une vitesse suffisante pour que les tensions D1, D2, D3 soient exploitables en entrée de l'unité de contrôle 4. Par conséquent, elle est impropre à assurer le démarrage synchrone du moteur.

C'est pourquoi on a déjà proposé de démarrer le moteur par une commande en boucle ouverte, les phases du stator étant alors alimentées (on dit aussi commutées) sans connaissance à priori de la position effective du rotor, puis de le commander en boucle fermé lorsqu'il a atteint une vitesse nominale considérée comme suffisante.

Durant le démarrage, le moteur est piloté à la manière d'un moteur pas à pas, de façon à générer un champ tournant de vitesse croissante sur lequel le rotor doit « s'accrocher » de façon synchrone. Chaque configuration de l'alimentation des enroulements L1, L2, L3 dans la séquence choisie (e.g. chaque configuration de phases) correspond à un « pas ».

Cependant, on a constaté que, à chaque « pas » de la séquence de démarrage, le rotor peut dépasser la position d'équilibre déterminée par la configuration de phases correspondant audit « pas » et se mettre à osciller autour de cette position d'équilibre. Ces oscillations du rotor génèrent du bruit acoustique lors du démarrage du moteur et ralentissent l'établissement de la vitesse nominale, notamment en ce qu'elles induisent des perturbations de la forme des tensions D1, D2 et D3 sur les drains des transistors.

Par ailleurs, la position de départ et le sens et la valeur de la vitesse initiale du rotor lors de l'alimentation des enroulements correspondant à un « pas » déterminé peuvent être tels que le moteur parte en sens inverse au sens désiré, ou, du moins tels que le comportement du moteur devienne erratique et le démarrage impossible.

C'est pourquoi on a également proposé un procédé de démarrage synchrone d'un moteur électrique à courant continu sans balai, dans lequel la commutation des phases du stator est commandée en boucle ouverte suivant une séquence de démarrage comprenant une pluralité de configurations de phases déterminées, à chacune desquelles correspond au moins une position d'équilibre du rotor, la durée pendant laquelle chaque configuration de phases est maintenue étant prédéterminée et calculée en résolvant l'équation de fonctionnement du moteur pour une valeur théorique du courant dans les enroulements du stator, avec des conditions initiales correspondant à la position et à la vitesse du rotor lorsque celui-ci a atteint la position d'équilibre correspondant à la configuration de phases précédente dans la séquence de démarrage, de manière à ce que, en fin de séquence, le moteur atteigne la vitesse de rotation théoriquement requise pour que les tensions induites par la f.c.e.m soit exploitables en vue du passage à la commande en boucle fermée.

Un tel procédé, conforme au préambule de la revendication 1, est par exemple décrit dans le document US 5,298,838. Il vise à faire en sorte que la durée de chaque configuration de phases soit la durée nécessaire et suffisante pour que le rotor atteigne la position d'équilibre correspondante.

Toutefois, si la vitesse réellement atteinte par le moteur à la fin de la séquence de démarrage est inférieure à la vitesse théoriquement requise pour pouvoir passer en commande en boucle fermée, il est prévu de réaliser une nouvelle séquence de démarrage avec cette fois, pour chaque configuration de phases, la même durée prédéterminée multipliée par un coefficient correcteur adapté (supérieur à 1) de manière à augmenter l'accélération du moteur. Plus précisément, on devra réaliser autant de séquence de démarrage que nécessaire en incrémentant à chaque fois le coefficient correcteur, jusqu'à ce que le moteur atteigne, à la fin de la dernière séquence, la vitesse théoriquement requise pour pouvoir passer en commande en boucle fermée.

Un tel procédé retarde le démarrage effectif du moteur, surtout lorsque les conditions de fonctionnement, notamment la charge du moteur, sont susceptibles de varier d'une utilisation à l'autre comme c'est le cas pour le moteur entraînant l'hélice de refroidissement moteur dont la charge est variable en fonction de la vitesse du véhicule. En effet, le nombre d'incrémentations nécessaires du coefficient correcteur peut être important. De plus, ce procédé nécessite l'utilisation d'un moyen de mesure de la vitesse du rotor ce qui complique sa mise en oeuvre et augmente le coût de réalisation du dispositif de commande du moteur.

Afin de pallier ces inconvénients de l'état de la technique, la présente invention propose un procédé du type précité dans lequel q valeurs de la durée de chaque configuration de phases sont calculées pour q valeurs théoriques différentes du courant dans les enroulements du stator, les durées de chaque configuration de phases utilisées pendant le démarrage étant déterminées en fonction du courant effectif mesuré dans les enroulements du stator.

En effet, le courant dans les phases du stator reflète les conditions de fonctionnement du moteur, notamment la charge appliquée.

De la sorte, quelque soit les conditions de fonctionnement du moteur, la durée pendant laquelle chaque configuration de phases est maintenue est la durée nécessaire et suffisante pour amener le rotor dans la position d'équilibre correspondant à ladite configuration de phases.

L'invention concerne aussi un dispositif de commande d'un moteur électrique à courant continu sans balai mettant en oeuvre un procédé tel que décrit ci-dessus, ledit moteur comprenant un rotor à aimants permanents comportant m pôles ainsi qu'un stator comportant n enroulements ou phases dont une première extrémité commune est connectée à la borne positive d'une source d'alimentation et dont l'autre extrémité est reliée à la masse respectivement à travers n transistors, l'état passant ou bloqué desdits transistors étant commandé par des tensions générées par une unité de contrôle, ladite unité de contrôle comportant :

- des moyens de commande en boucle ouverte pour commander en boucle ouverte l'état des transistors selon une séquence de commande comportant une pluralité de configurations de phases prédéterminées de manière à assurer le démarrage synchrone du moteur ;
- une mémoire contenant q valeurs de la durée de chaque configuration de phases calculées pour q valeurs théoriques différentes du courant circulant dans les enroulements du stator ;
- des moyens pour mesurer le courant effectif circulant dans les enroulements du stator.

D'autres caractéristiques et avantages de l'invention ressortiront à la lecture de la description non limitative qui va suivre en référence aux dessins annexés qui montrent :

- à la figure 1, déjà analysée : un schéma d'un dispositif de commande d'un moteur à commutation électronique selon l'art antérieur ;
- aux figures 2a à 2c : des chronogrammes des tensions de commandes appliquées sur les grilles des transistors de commutation lors du démarrage du moteur ;
- à la figure 3a : une représentation schématique d'un rotor à quatre pôles ;
- à la figure 3b : une représentation des axes sur lesquels est aligné le champ magnétique résultant pour chaque configuration de phases de la séquence de démarrage ;
- à la figure 4 : un schéma d'un dispositif de commande d'un moteur à commutation électronique selon l'invention.

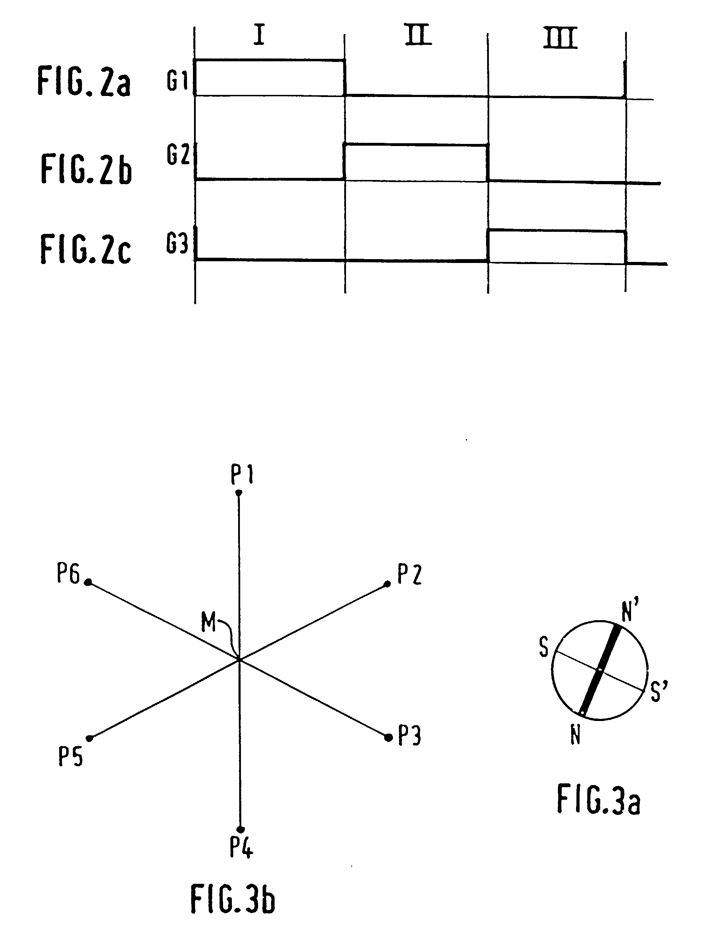

Sur la figure 3a on a représenté un rotor 5 à aimants permanents comportant m pôles, par exemple quatre, dont deux pôles nord N et N' et deux pôles sud S et S' alternés.

Sur la figure 3b on a également représenté les trois directions P1P4, P2P5 et P3P6 pouvant être occupées par l'axe NN' du rotor.

Dans la suite on considérera par convention que le sens de bobinage des enroulements L1, L2, L3 est tel que le champ magnétique généré dans ces enroulements lorsqu'ils sont parcourus par un courant, c'est-à-dire lorsque le transistor correspondant T1, T2, T3 est passant, exerce sur le rotor un couple qui conduit celui-ci à venir dans une position telle que l'axe NN' des pôles nord soit aligné avec l'axe du vecteur champ résultant, respectivement P1P4, P3P6 ou P2P5. Ainsi, par convention, l'axe NN' des pôles nord sera utilisé pour se référer à la position angulaire du rotor.

Aux figures 2a, 2b et 2c on a représenté respectivement l'allure des tensions G1, G2, G3 générées par l'unité de contrôle 4 et appliquées sur les grilles des trois transistors MOS respectivement T1, T2, T3 lors du démarrage du moteur.

Ainsi qu'il a déjà été dit, le dispositif de commande selon l'invention fonctionne en boucle ouverte lors du démarrage du moteur, le rotor progressant par « pas » successifs.

De plus, ainsi qu'il a également déjà été dit, le niveau des tensions G1, G2, G3 est généré par l'unité de contrôle 4 de manière à faire fonctionner les transistors T1, T2 et T3 en résistance variable en sorte que l'amplitude VG des tensions G1, G2 et G3 détermine l'amplitude du courant IM1, IM2, IM3 circulant dans les enroulements du stator.

On va maintenant décrire le déroulement de la séquence de commande du moteur lors du démarrage du moteur, et ce, étape par étape, le terme « étape » étant utilisé dans la suite comme synonyme des termes « configuration de phases » et « pas » utilisés plus haut.

Le détail de ces différentes étapes est expliqué ci-dessous :

- dans une première étape I, le signal G1 est à l'état haut en sorte que le transistor T1 conduit et les signaux G2 et G3 sont à l'état bas en sorte que les transistors T2 et T3 sont bloqués ; l'enroulement L1 est seul parcouru par un courant IM1 ; le vecteur champ résultant est aligné sur l'axe P1P4 (figure 3b) ;
- Dans une deuxième étape II, le signal G1 est à l'état bas ainsi que le signal G3 en sorte que les transistors T1 et T3 sont bloqués et le signal G2 est à l'état haut en sorte que le transistor T2 conduit, l'enroulement L2 étant seul parcouru par un courant IM2 ; le vecteur champ résultant est alors aligné sur l'axe P3P6 (figure 3b) ;
- Dans une troisième étape III, les signaux G1 et G2 sont à l'état bas en sorte que les transistors T1 et T2 sont bloqués et le signal G3 est à l'état haut en sorte que le transistor T3 conduit, l'enroulement L3 étant seul alimenté ; l'enroulement L3 est alors parcouru par un courant IM3 ; le vecteur champ résultant est alors aligné sur l'axe P2P5 (figure 3b).

Avec un rotor présentant deux paires de pôles tel qu'envisagé dans le mode de réalisation préféré de l'invention (figure 3a), le déroulement des étapes I à III ci-dessus permet de faire effectuer au rotor la moitié d'un tour du moteur.

En effet, le rotor ayant deux paires de pôles , il est bien évident qu'il peut prendre six positions angulaires différentes espacées de 60° (Π/3), car pour chaque configuration de phases ci-dessus, le rotor présente deux positions d'équilibre possibles (avec un rotor comportant deux pôles uniquement, il y aurait autant de positions d'équilibre que de configurations de phases).

On remarque de plus que les signaux de commande G1, G2, G3 sont décalés électriquement de 120° (2Π/3). Les étapes I à III peuvent évidemment être répétées périodiquement et on parlera à cet effet d'une séquence périodique pour se référer au déroulement répété des étapes I, II, III, I, II, ...

Cette séquence périodique est la séquence adoptée dans un mode de réalisation préféré de l'invention mais il est bien évident qu'il est possible d'adopter une autre séquence, comprenant des configurations de phases différentes et/ou en nombre plus important à chacune desquelles correspondra au moins une position d'équilibre du rotor, sans sortir du cadre de l'invention.

Ainsi qu'il a été exposé en préambule de la présente demande, l'invention propose d'adapter la durée des configurations de phases ou « pas » à la valeur du courant effectif IM circulant dans les enroulements Ln du stator (courant effectif moteur), de manière à ce que chaque étape I-III soit démarrée lors du premier passage du rotor par la position d'équilibre correspondant à l'étape précédente dans la séquence de démarrage, quelque soit notamment la charge du moteur.

Selon l'invention, la durée de chaque étape ou « pas » est calculée comme une fonction de caractéristiques constantes déterminées du moteur, telles que le facteur de couple K et le moment d'inertie J du rotor et des éléments mécaniques entraînés, et ce pour différentes valeurs théoriques du courant moteur.

Selon un mode de réalisation préféré de l'invention, le courant commandé dans les enroulements est identique pour chaque « pas » de la séquence de démarrage, en sorte que le niveau VG des tensions G1, G2, G3 générées est constant pendant le démarrage, mais il est également envisageable de commander des valeurs différentes du courant pour chaque « pas » de la séquence de démarrage, de manière, par exemple, à tenir compte de l'accélération du moteur.

Dans le cas général, on notera IM(i,k) la k-ième valeur théorique du courant moteur pour laquelle la durée du « pas » i est calculée.

La durée T(i,k) de chaque « pas » i est ainsi calculée, pour chaque valeur théorique IM(i,K) du courant moteur, en résolvant l'équation de fonctionnement E du moteur qui est une équation différentielle du second degré de la variable θ donnée par l'expression ci-

dessous :

$$E : J * \frac{d^2\theta}{dt^2} + f * \frac{d\theta}{dt} = Cm - Cr$$

où :

- « θ » désigne une mesure exprimée en radians de l'angle parcouru par le rotor au cours du « pas » i ;
- « J » est le moment d'inertie du rotor et des éléments mécaniques entraînés ;
- « f » est un coefficient rendant compte des frottements visqueux appliqués au rotor ;
- « Cm » est le couple moteur appliqué au rotor ;
- « Cr » est le couple résistant moteur appliqué au rotor.

L'équation E de fonctionnement du moteur telle que définie ci-dessus provient de l'écriture de l'équation générale de la mécanique.

En première approximation, on peut considérer que les frottements visqueux et le couple résistant appliqués au rotor sont négligeables. D'où il suit que f et Cr sont nuls.

De plus, sachant que pour un moteur synchrone triphasé à deux paires de pôles, l'angle parcouru par le rotor au cours de chaque « pas » vaut 60° (soit Π/3 en radians), le couple moteur Cm pour chaque « pas » i s'exprime suivant l'expression approchée ci-dessous :

$$Cm = - K * IM(i,k) * \sin[2(\theta - i\Pi/3)]$$

où :

- « K » désigne le facteur de couple du rotor et des éléments mécaniques entraînés ;
- « i » désigne l'indice correspondant au « pas » courant, i variant de 1 à p, avec p le nombre de pas de la séquence de démarrage ;
- « IM(i,k) » exprime la k-ième valeur du courant théoriquement appliqué dans le (ou les) enroulement(s) Ln alimenté(s) pendant ledit « pas » i, k variant de 1 à q, avec q le nombre de valeurs théoriques différentes envisagées de ce courant, par exemple q=10 ;
- « Π » désigne le nombre PI dont une valeur approchée est 3,1416.

Le calcul de la durée T(i,k) est réalisé en intégrant l'équation E par rapport au temps pour en déduire une expression de la variable dt en fonction de la variable dθ (en posant comme condition initiale une valeur de la vitesse du rotor correspondant à la vitesse du rotor à la fin du « pas » précédant i-1), puis en intégrant cette expression par rapport à la variable dθ entre les valeurs de l'angle du rotor au début et à la fin du « pas » courant i.

Pour le premier « pas » (i=1), la durée T(1,k) se calcule en intégrant l'équation E du mouvement du moteur avec des conditions initiales correspondant à une vitesse du rotor nulle.

Ainsi, la durée T(i,k) de chaque « pas » i est telle que ledit « pas » i s'achève dès que le rotor passe pour la première fois par la position d'équilibre correspondante, pour un courant moteur théorique ayant la valeur IM(i,k). Dit autrement, la durée d'un « pas » est la durée nécessaire et suffisante pour amener le rotor dans la position d'équilibre correspondante pour ledit courant moteur théorique.

De façon générale, on peut montrer que les durées T(i) s'expriment sous la forme :

$$T(i,k) = A_i * \sqrt{(J/(K*IM(i,k)))}$$

où

- « √ » désigne la fonction mathématique « racine carrée » ;
- et « $A_i$ » désigne un coefficient qui dépend de la forme des courants IMn appliqués aux enroulements Ln. Selon un mode de réalisation préféré de l'invention, les enroulements sont excités par des courants impulsionnels de durée T(i,k) et d'intensité IM(i,k).

On peut alors démontrer que, pour un moteur synchrone triphasé à deux paires de pôles, un « pas » correspondant à un angle de 60°, les coefficients prennent des valeurs décroissantes $A_1$, $A_2$, $A_3$, ... telles que :

$$A_1 = \sqrt{(1/2)} * \int_{(0,2\Pi/3)} \frac{d\theta'}{\sqrt{(1+2\cos\theta')}}$$

$$A_2 = 1/2 * \int_{(0,2\Pi/3)} \frac{d\theta'}{\sqrt{(2+\cos\theta')}}$$

$$A_3 = .. \text{ etc } ....$$

où, de plus,

- « θ' » désigne une variable d'intégration exprimée en radians ;
- « $\int_{(0,2\Pi/3)}$ » désigne l'intégrale de la variable d'intégration dθ' calculée entre les valeurs 0 (zéro) et 2Π/3 (c'est à dire 60° exprimé en radians).

Le calcul de la valeur des durées T(i,k) de chaque « pas » i est effectué une fois pour toutes en laboratoire et les valeurs obtenues sont sauvegardées dans la mémoire d'un calculateur tel qu'un microcontrôleur, sous forme d'une table de valeurs indexée par les variables i et k. Cette table de valeurs est mathématiquement une table à deux dimensions. Le microcontrôleur est compris dans l'unité de contrôle 4.

Selon un mode de réalisation préféré de l'invention, la séquence de démarrage comporte un nombre de « pas » déterminé, par exemple six « pas », ce qui pour un moteur triphasé à deux paires de pôles correspond à un tour du moteur, au terme duquel la vitesse du rotor est théoriquement suffisante pour que les tensions D1, D2 et D3 sur les drains des transistors T1, T2, T3 soient exploitables et donc pour que la commande en boucle fermée soit possible.

Il est évidemment possible prévoir une séquence de démarrage avec un nombre de « pas » plus important avant de commander le moteur en boucle fermée.

Le dispositif de commande du moteur comporte des moyens pour générer un signal VRS qui est une mesure du courant effectif IM circulant dans les enroulements du stator (courant effectif moteur) lors de la séquence de démarrage, et les durées des « pas » de la séquence de démarrage sont définies par l'unité de contrôle 4 en fonction dudit signal.

Selon le mode de réalisation du dispositif de commande selon l'invention, représenté à la figure 4 sur laquelle les mêmes éléments qu'à la figure 1 portent les mêmes références, les moyens pour générer le signal VRS comprennent une résistance shunt RS connectée entre les sources communes des transistors T1, T2, et T3 d'une part et la masse d'autre part.

La tension aux bornes de la résistance RS constitue ledit signal VRS de mesure du courant effectif moteur. Elle est portée sur une entrée IN de l'unité de contrôle 4, et après remise en forme analogique, est portée sur une entrée d'un convertisseur analogique/numérique du microcontrôleur de l'unité de contrôle permettant sa lecture par ledit microcontrôleur.

Préférentiellement, la mesure du courant effectif moteur est réalisée comme une moyenne sur une pluralité d'échantillons successifs. La mesure du courant effectif moteur est ainsi plus précise.

Les moyens de mesure du courant effectif moteur sont extrêmement simples. En effet, la plupart des microcontrôleurs disponibles sur le marché comprennent au moins un convertisseur analogique/numérique intégré, en sorte que le seul composant supplémentaire requis est la résistance shunt RS.

La mesure du courant effectif moteur IM est effectuée une seule fois, avant le début de la séquence de démarrage, par exemple lors d'une phase préalable de calage du moteur au cours de laquelle un courant théorique est commandé dans au moins une phase du stator. Une telle phase de calage est décrite par exemple dans le document DE-A-24 28 718.

En variante, la mesure du courant effectif moteur IM est répétée au cours de chaque « pas », la durée T(i,k) du « pas » i courant étant choisie dans la table de valeurs en fonction de la valeur du courant effectif moteur IM mesurée lors du « pas » i-1 précédant. Dans ce cas, il est naturellement nécessaire de maintenir la configuration de phases correspondant au premier « pas » (i=1) de la séquence de démarrage pendant une durée T(1) arbitraire vis à vis du courant effectif moteur. Cette variante permet de rendre la commande encore plus précise puisque la durée de chaque « pas » est décidée en fonction du comportement du moteur au cours du « pas » précédant. On peut ainsi s'affranchir d'éventuels points durs lors du démarrage.

Dans tous les cas, les durées T(i,k) de chaque configuration de phases utilisées pendant le démarrage sont celles calculées pour la valeur théorique du courant correspondant à la valeur du courant effectif moteur IM mesurée dans les enroulements du stator si une telle valeur existe ou à une desdites valeurs théoriques, qui est alors déterminée par approximation de la valeur du courant effectif mesuré IM à la valeur théorique IM(i,k) la plus proche. Toutes les méthodes de traitement à la portée de l'homme du métier sont ici envisageables. Par exemple, la valeur du courant moteur mesurée peut être arrondie à la plus proche valeur prédéterminée IM(i,k) utilisée pour le calcul des durées T(i,k) contenues dans la mémoire du microcontrôleur. L'unité de contrôle 4 comporte à cet effet des moyens de traitement adaptés.

Ainsi qu'on l'aura compris, le dispositif de commande selon l'invention est piloté par un programme sauvegardé dans une mémoire du microcontrôleur.

La présente invention a été décrite selon un mode de réalisation préféré mais non limitatif. Notamment, elle s'applique à un moteur électrique synchrone dont le stator comporte un nombre n quelconque de phases et dont le rotor comporte un nombre m quelconque de pôles.

## Revendications

1. Procédé de démarrage synchrone d'un moteur électrique à courant continu sans balai, dans lequel la commutation des phases (L1,L2,L3) du stator est commandée en boucle ouverte suivant une séquence de démarrage comprenant une pluralité de configurations de phases déterminées, à chacune desquelles correspond au moins une position d'équilibre du rotor (5), la durée pendant laquelle chaque configuration de phases (i) est maintenue étant prédéterminée et calculée en résolvant l'équation (E) de fonctionnement du moteur pour une valeur théorique du courant dans les enroulements du stator, avec des conditions initiales correspondant à la position et à la vitesse du rotor (5) lorsque celui-ci a atteint la position d'équilibre correspondant à la configuration de phases précédente (i-1) dans la séquence de démarrage, caractérisé en ce que q valeurs de la durée (T(i,k)) de chaque configuration de phases sont calculées pour q valeurs théoriques différentes (IM(i,k)) du courant dans les enroulements du stator, les durées de chaque configuration de phases utilisées pendant le démarrage étant déterminées en fonction du courant effectif (IM) mesuré dans les enroulements du stator (L1,L2,L3).

2. Procédé selon la revendication 1, caractérisé en ce que le courant commandé dans les enroulements est identique pour chaque configuration de phase de la séquence de démarrage.

3. Procédé selon la revendication 1, caractérisé en ce que le courant commandé dans les enroulements est différent pour chaque configuration de phase de la séquence de démarrage.

4. Procédé selon la revendication 1, caractérisé en ce que la mesure du courant effectif (IM) dans les enroulements du stator est effectuée une seule fois, avant le début de la séquence de démarrage.

5. Procédé selon la revendication 1, caractérisé en ce que la mesure du courant effectif (IM) dans les enroulements du stator est répétée au cours de chaque configuration de phases de la séquence de démarrage, la durée (T(i,k)) d'une configuration de phases déterminée (i) étant choisie en fonction de la valeur du courant effectif (IM) dans les enroulements du stator mesurée lors de la configuration de phases précédente (i-1).

6. Procédé selon la revendication 1, caractérisé en ce que la mesure du courant effectif dans les enroulements du stator est réalisée comme une moyenne sur une pluralité d'échantillons successifs.

7. Procédé selon la revendication 1, caractérisé en ce que les durées (T(i,k)) de chaque configuration de phases utilisées pendant le démarrage sont celles calculées pour la valeur théorique du courant correspondant à la valeur du courant effectif (IM) mesuré dans les enroulements du stator si une telle valeur existe ou à une desdites valeurs théoriques déterminée par approximation.

8. Dispositif de commande d'un moteur électrique à courant continu sans balai mettant en oeuvre un procédé selon l'une des revendications précédentes, ledit moteur comprenant un rotor (5) à aimants permanents comportant m pôles (N,S,N',S') ainsi qu'un stator comportant n enroulements ou phases (L1,L2,L3) dont une première extrémité commune (M) est connectée à la borne positive d'une source d'alimentation (3) et dont l'autre extrémité est reliée à la masse respectivement à travers n transistors (T1,T2,T3), l'état passant ou bloqué desdits transistors étant commandé par des tensions (G1,G2,G3) générées par une unité de contrôle (4), caractérisé en ce que ladite unité de contrôle (4) comporte :

- des moyens de commande en boucle ouverte pour commander en boucle ouverte l'état des transistors selon une séquence de commande comportant une pluralité de configurations de phases prédéterminées (I-III) de manière à assurer le démarrage synchrone du moteur ;
- une mémoire contenant q valeurs de la durée (T(i,k)) de chaque configuration de phases calculées pour q valeurs théoriques différentes du courant (IM(i,k)) circulant dans les enroulements (L1,L2,L3) du stator ;
- des moyens de mesure du courant effectif circulant dans les enroulements du stator.

9. Dispositif selon la revendication 8, caractérisé en ce que le dispositif de contrôle (4) comporte un microcontrôleur et en ce que les valeurs des durées (T(i,k)) de chaque configuration de phases est sauvegardée sous forme de table de valeurs dans une mémoire dudit microcontrôleur.

10. Dispositif selon la revendication 8, caractérisé en ce que les moyens de mesure du courant effectif circulant dans les enroulements du stator comportent une résistance shunt (RS) connectée entre les sources communes des transistors de commutation (T1,T2,T3) d'une part et la masse d'autre part.

**Patentansprüche**

1. Synchronanlaufverfahren für einen bürstenlosen elektrischen Gleichstrommotor, bei dem die Kommutierung der Phasen (L1, L2, L3) des Ständers in einem offenen Wirkungskreis nach einer Anlaufsequenz gesteuert wird, die eine Mehrzahl bestimmter Phasenkonfigurationen umfaßt, denen jeweils mindestens eine Gleichgewichtsposition des Läufers (5) entspricht, wobei die Dauer, während der jede Phasenkonfiguration (i) aufrechterhalten wird, vorbestimmt ist und durch Lösung der Betriebsgleichung (E) des Motors für einen theoretischen Wert des Stroms in den Ständerwicklungen berechnet wird, mit Anfangsbedingungen, die der Position und der Geschwindigkeit des Läufers (5) entsprechen, wenn dieser die Gleichgewichtsposition erreicht hat, die der vorangehenden Phasenkonfiguration (i-1) in der Anlauf sequenz entspricht, **dadurch gekennzeichnet**, daß q Werte der Dauer (T(i,k)) jeder Phasenkonfiguration für q verschiedene theoretische Werte (IM(i,k)) des Stroms in den Ständerwicklungen berechnet werden, wobei die während des Anlaufens benutzten Dauern jeder Phasenkonfiguration in Abhängigkeit von dem in den Ständerwicklungen (L1, L2, L3) gemessenen effektiven Strom (IM) bestimmt sind.

2. Verfahren nach Anspruch 1, **dadurch gekenn-**

**zeichnet**, daß der in den Wicklungen gesteuerte Strom für jede Phasenkonfiguration der Anlaufsequenz identisch ist.

3. Verfahren nach Anspruch 1 , **dadurch gekennzeichnet,** daß der in den Wicklungen gesteuerte Strom für jede Phasenkonfiguration der Anlaufsequenz verschieden ist.

4. Verfahren nach Anspruch 1 , **dadurch gekennzeichnet,** daß die Messung des effektiven Stroms (IM) in den Ständerwicklungen ein einziges Mal vor dem Beginn der Anlaufsequenz erfolgt.

5. Verfahren nach Anspruch 1 , **dadurch gekennzeichnet,** daß die Messung des effektiven Stroms (IM) in den Ständerwicklungen im Verlauf jeder Phasenkonfiguration der Anlaufsequenz wiederholt wird, wobei die Dauer (T(i,k)) einer bestimmten Phasenkonfiguration (i) in Abhängigkeit von dem bei der vorangehenden Phasenkonfiguration (i-1) gemessenen Wert des effektiven Stroms (IM) in den Ständerwicklungen gewählt wird.

6. Verfahren nach Anspruch 1 , **dadurch gekennzeichnet,** daß die Messung des effektiven Stroms in den Ständerwicklungen als ein Mittelwert bezogen auf eine Mehrzahl von aufeinanderfolgenden Proben ausgeführt wird.

7. Verfahren nach Anspruch 1 , **dadurch gekennzeichnet,** daß die während des Anlaufvorgangs benutzten Dauern (T(i,k) jeder Phasenkonfiguration die Dauern sind, die für den theoretischen Wert des Stroms berechnet werden, der dem Wert des in den Ständerwicklungen gemessenen Stroms (IM), wenn ein solcher Wert existiert, oder einem der besagten theoretischen Werte entspricht, der näherungsweise bestimmt wird.

8. Steuervorrichtung für einen bürstenlosen elektrischen Gleichstrommotor, bei der ein Verfahren nach einem der vorangehenden Ansprüche zur Anwendung kommt, wobei der besagte Motor einen Läufer (5) mit Permanentmagneten mit m Polen (N, S, N', S') sowie einen Ständer mit n Wicklungen oder Phasen (L1, L2, L3) umfaßt, deren gemeinsames erstes Ende (M) mit der Plusklemme einer Stromversorgungsquelle (3) verbunden ist und deren anderes Ende über n Transistoren (T1, T2, T3) mit der Masse verbunden ist, wobei der Durchlaß- oder Sperrzustand der besagten Transistoren durch Spannungen (G1, G2, G3) gesteuert wird, die durch eine Kontrolleinheit (4) erzeugt werden, **dadurch gekennzeichnet**, daß die besagte Kontrolleinheit (4) folgendes umfaßt:

- Steuermittel mit offenem Wirkungskreis, um in einem offenen Wirkungskreis den Zustand der Transistoren nach einer Steuersequenz zu steuern, die eine Mehrzahl von vorbestimmten Phasenkonfigurationen (I-III) umfaßt, um das synchrone Anlaufen des Motors zu gewährleisten;

- einen Speicher, der q Werte der Dauer (T(i,k)) jeder Phasenkonfiguration enthält, die für q verschiedene theoretische Werte des in den Ständerwicklungen (L1, L2, L3) fließenden Stroms (IM(i,k)) berechnet werden;

- Mittel, um den in den Ständerwicklungen fließenden effektiven Strom zu messen.

9. Vorrichtung nach Anspruch 8, **dadurch gekennzeichnet**, daß die Kontrolleinheit (4) einen Mikrosteuerbaustein umfaßt und daß die Werte der Dauern (T(i,k)) jeder Phasenkonfiguration in Form von Wertetabellen in einem Speicher des besagten Mikrosteuerbausteins gespeichert werden.

10. Vorrichtung nach Anspruch 8, **dadurch gekennzeichnet,** daß die die Mittel zur Messung des in den Ständerwicklungen fließenden effektiven Stroms einen Nebenschlußwiderstand (RS) umfassen, der zwischen den Source-Schaltungen der Schalttransistoren (T1, T2, T3) einerseits und der Masse andererseits geschaltet ist.

**Claims**

1. Method for the synchronous starting of a brushless DC electric motor, in which the switching of the phases (L1, L2, L3) of the stator is controlled in open loop in a starting sequence comprising a plurality of given phase configurations, to each of which there corresponds at least one equilibrium position of the rotor (5), the period during which each phase configuration (i) is maintained being predetermined and calculated by resolving the equation (E) of operation of the motor for a theoretical value of the current in the stator windings, with initial conditions corresponding to the position and speed of the rotor (5) when the latter has reached the equilibrium position corresponding to the previous phase configuration (i-1) in the starting sequence, characterised in that q values of the duration (T(i,k)) of each phase configuration are calculated for q different theoretical values (IM(i,k)) of the current in the stator windings, the durations of each phase configuration used during the starting being determined according to the actual current (IM) measured in the stator windings (L1, L2, L3).

2. Method according to Claim 1, characterised in that the current controlled in the windings is identical for each phase configuration of the starting sequence.

3. Method according to Claim 1, characterised in that the current controlled in the windings is different for each phase configuration of the starting sequence.

4. Method according to Claim 1, characterised in that the measurement of the actual current (IM) in the stator windings is made only once, before the beginning of the starting sequence.

5. Method according to Claim 1, characterised in that the measurement of the actual current (IM) in the stator windings is repeated during each phase configuration of the starting sequence, the duration (T(i,k)) of a given phase configuration (i) being chosen as a function of the value of the actual current (IM) in the stator windings measured during the previous phase configuration (i-1).

6. Method according to Claim 1, characterised in that the measurement of the actual current in the stator windings is carried out as an average over a plurality of successive samples.

7. Method according to Claim 1, characterised in that the durations (T(i,k)) of each phase configuration used during the starting are those calculated for the theoretical value of the current corresponding to the actual current value (IM) measured in the stator windings if such a value exists or to one of the said theoretical values determined by approximation.

8. Device for controlling a brushless DC electric motor implementing a method according to one of the preceding claims, the said motor comprising a rotor (5) with permanent magnets having m poles (N, S, N', S') and a stator having n windings or phases (L1, L2, L3), a first common end (M) of which is connected to the positive terminal of a power supply source (3) and the other end of which is connected to earth respectively through n transistors (T1, T2, T3), the on or off state of the said transistors being controlled by voltages (G1, G2, G3) generated by a control unit (4), characterised in that the said control unit (4) has:

 - open-loop control means for controlling, in open loop, the state of the transistors according to a control sequence including a plurality of predetermined phase configurations (I-III) so as to provide synchronous starting of the motor;

 - a memory containing q values of the duration (T(i,k)) of each phase configuration calculated for q different theoretical values of the current (IM(i,k)) flowing in the stator windings (L1, L2, L3);

 - means of measuring the actual current flowing in the stator windings.

9. Device according to Claim 8, characterised in that the control device (4) has a microcontroller and in that the values of the durations (T(i,k)) of each phase configuration is saved in the form of a table of values in a memory of the said microcontroller.

10. Device according to Claim 8, characterised in that the means of measuring the actual current flowing in the stator windings include a shunt resistance (RS) connected between the common sources of the switching transistors (T1, T2, T3) on the one hand and earth on the other hand.

FIG.1

FIG.4

FIG.2a   G1

FIG.2b   G2

FIG.2c   G3

I    II    III

P1

P6      P2

M

P5      P3

P4

**FIG.3b**

N'

S    S'

N

**FIG.3a**